# FASCICULE DE BREVET EUROPEEN

(11) **EP 2 522 212 B1**
(45) Date de publication et mention de la délivrance du brevet: **23.09.2015**
(21) Numéro de dépôt: 12164754.9
(22) Date de dépôt: 19.04.2012
(51) Int. Cl.: A01G 9/14

(54) **Dispositif d'évacuation d'eau condensée à la face intérieure du film de couverture d'une serre**
Vorrichtung zum Ableiten von Kondenswasser auf der Innenseite der Abdeckfolie eines Gewächshauses
Device for draining water condensed on the inner surface of the covering film of a greenhouse

(30) Priorité: 13.05.2011 FR 1154186
(43) Date de publication de la demande: 14.11.2012
(73) Titulaire: Filclair, 13770 Venelles (FR)
(72) Inventeur: Thery, Arnauld, 13510 Eguilles (FR)
(74) Mandataire: Domange, Maxime

(56) Documents cités:
- WO-A1-00/25571
- DE-A1-102009 059 994
- FR-A1- 2 867 351

## Description

### Arrière-plan de l'invention

La présente invention se rapporte au domaine général des serres à parois en film plastique. Ces serres à parois en film plastique utilisent, de manière extensive, des clips profilés pour constituer les montants des parois et des ouvrants. Ces clips profilés permettent aussi la réalisation de fonctions diverses, dont la fixation des films et l'installation de divers éléments fonctionnels, comme, par exemple, dans le document FR 2 867 351 A1.

L'invention s'intéresse plus particulièrement à l'utilisation d'un clip profilé dans le cadre d'un dispositif d'évacuation d'eau condensée.

Il est bien connu que les serres à parois plastiques génèrent une accumulation d'eau condensée sur les faces intérieures des films. Cette eau condensée provient des réactions de photosynthèse des plantes installées au sein des serres. La quantité d'eau condensée est généralement importante en début de journée et génère des désagréments dus à la mauvaise évacuation de cette eau condensée.

En effet, des phénomènes de gouttage sont souvent observés en début de journée et cela peut contribuer à une dégradation des cultures.

Aussi, des dispositifs sont connus pour récupérer cette eau condensée. Il s'agit actuellement de gouttières internes à la serre installées sous les chéneaux. Ces gouttières internes recueillent l'eau condensée par gouttage sous le chéneau.

Ces gouttières doivent généralement être au moins aussi larges que les chéneaux et sont donc relativement encombrantes. En général, ces gouttières internes impliquent de prévoir un écoulement d'eau à l'intérieur de la serre pour évacuer l'eau accumulée dans ces gouttières. On n'assure donc pas une évacuation réelle de la quantité d'eau condensée hors de la serre.

Il reste possible de prévoir un système d'évacuation de l'eau vers l'extérieur de la serre mais cela est généralement d'installation complexe.

Ces gouttières ou goulottes internes de récupération des condensats sont généralement situés sous le chéneau d'eau pluviale. Cela nécessite que le chéneau soit de forme en V prononcé pour permettre le glissement des gouttes de condensat sur sa face inférieure et ce, jusqu'à la pointe de son V, pour ensuite goutter dans la goulotte de récupération situé sous la pointe de ce V.

Le premier inconvénient majeur du système et qu'il offre de piètres résultats. En effet, la majeure partie de la condensation est généralement tombée sous forme de gouttes avant de parvenir jusqu'à la pointe du V.

Le deuxième inconvénient de ce système est qu'il nécessite des chéneaux en forme de V. Or la deuxième fonction des chéneaux est de permettre le cheminement d'un homme en toiture pour les opérations de maintenance. Une gouttière en V n'est pas adaptée à cet usage. En effet, contrairement à une gouttière à fond plat, cette géométrie rend périlleux et dangereux tout cheminement.

Quoiqu'il en soit les dispositifs connus sont encombrants au sein de la serre et introduisent une certaine complexité de la structure au niveau des chéneaux placés sur les lignes d'intersection des chapelles.

Il existe aujourd'hui une demande et un besoin pour des solutions d'évacuation d'eau condensée plus compactes, simples d'installation et ne parasitant pas les fonctions variées des chéneaux.

### Objet et résumé de l'invention

La présente invention a donc pour but principal de pallier à ce manque, en proposant un dispositif d'évacuation d'eau condensée destiné à être installé sur une bordure supérieure d'un chéneau de serre à paroi en film plastique, le dispositif comprenant des clips profilés fixés sur la bordure supérieure du chéneau, ces clips profilés comprenant un rail central en U destiné à recevoir un élément de maintien du film plastique apte à pincer le film plastique entre cet élément de maintien et la paroi interne du rail central, les clips profilés comprenant en outre une cornière latérale, l'alignement des cornières latérales des clips profilés fixés sur la bordure supérieure du chéneau formant gouttière vers l'intérieur de la serre pour recevoir l'eau de condensation s'écoulant sur la paroi intérieure du film plastique en direction du chéneau, les clips profilés comprenant des premiers moyens de circulation d'eau pour permettre l'écoulement de l'eau de la gouttière vers l'intérieur du rail central et des seconds moyens de circulation d'eau pour permettre l'écoulement de l'eau de l'intérieur du rail central dans le chéneau.

Un tel dispositif d'évacuation d'eau permet d'installer la fonction d'évacuation de l'eau au sein même du clip permettant la fixation du film plastique. Le clip possède alors deux fonctions combinées au sein du même élément de construction. L'installation du dispositif d'évacuation est donc extrêmement compacte.

Cela est très avantageux en termes de fabrication et de construction. Les couts pour implémenter la fonction d'évacuation d'eau sont alors très réduits.

En outre, l'invention évite l'installation de tout autre élément de recueillement et d'évacuation de l'eau qui pourrait générer de l'encombrement et des zones d'ombrage au sein de la serre. La fonction d'évacuation d'eau est ainsi implémentée au sein de la serre, de manière optimale.

Un des problèmes des dispositifs d'évacuation d'eau condensée vers l'extérieur de la serre est la possibilité pour les insectes de s'introduire dans celle-ci par les voies prévues pour l'évacuation de l'eau. Il n'existe pas réellement, à ce jour, de solution simple permettant l'évacuation de l'eau condensée sans permettre à des insectes d'entrer dans l'espace interne de la serre.

Dans un mode de réalisation de l'invention visant à résoudre ce manque, les seconds moyens de circulation sont tels qu'ils font également barrage de rétention de l'eau de condensation dans le rail central de manière à assurer un affleurement de l'eau retenue dans le rail central contre le bas de l'élément de maintien, le dispositif d'évacuation réalisant ainsi une fonction de barrière anti-insectes.

Ce mode de réalisation permet d'utiliser l'eau de condensation pour faire barrage aux insectes. Le dispositif d'évacuation d'eau selon l'invention assure ainsi l'absence d'introduction d'insectes au sein de l'espace interne de la serre par les moyens permettant l'évacuation d'eau.

Ce mode de réalisation exploite la présence du rail central servant pour la fixation du film pour implémenter cette troisième fonction du clip profilé à la base du dispositif d'évacuation d'eau selon l'invention. Le rail central est utilisé pour piéger l'eau provenant de la gouttière latérale formée par les cornières. L'eau piégée vient affleurer contre l'élément de maintien du film et donc contre le film lui-même. Les insectes ne peuvent alors pas entrer dans le rail central et l'évacuation d'eau elle-même en provenance de la gouttière latérale permet de mettre en oeuvre cette troisième fonction.

Dans un mode de réalisation préférentiel, les premiers et seconds moyens de circulation d'eau sont situés au niveau de la jonction entre les clips profilés.

Cette caractéristique exploite l'interruption inévitable entre deux clips profilés pour la mise en oeuvre des moyens de circulation d'eau. Cela engendre une facilité de fabrication puisque seules les extrémités des clips profilés sont mises à contribution pour réaliser l'invention.

Selon une réalisation préférentielle, les clips profilés sont fixés sur la bordure supérieure du chéneau avec un interstice non nul entre eux, cet interstice constituant les premiers et seconds moyens d'écoulement en assurant une ouverture entre la gouttière formée par les cornières latérales et le rail central et une autre ouverture entre le rail central et le chéneau, l'interstice étant comblé sur le fond du rail central et l'interstice étant comblé au niveau des cornières latérales sur l'intérieur de la serre pour former la continuité de la gouttière.

Une telle réalisation permet de réaliser l'invention de manière très simple sans utiliser de conformation particulière des clips profilés, y compris à leurs extrémités. Ils sont seulement installés avec un interstice entre eux. Ce mode de réalisation évite de devoir utiliser des éléments techniques additionnels pour la mise en oeuvre des moyens de circulation d'eau ou des découpes particulières des extrémités des clips profilés.

Dans un mode de réalisation avantageux, l'interstice est partiellement comblé au niveau du chéneau pour former un barrage assurant l'affleurement de l'eau contre le bas de l'élément de maintien tout en permettant l'écoulement de l'eau vers les chéneaux.

Dans un mode de réalisation particulier, l'interstice est comblé sur le fond du rail central par la bordure supérieure du chéneau.

Ce mode de réalisation nécessite que la bordure supérieure du chéneau soit une surface d'au moins la largeur du clip profilé incluant le rail central. Selon ce mode de réalisation, cette bordure supérieure est alors précisément utilisée pour combler le fond des interstices laissés entre les clips profilés. L'installation du dispositif d'évacuation d'eau selon l'invention est alors particulièrement simple car aucune action d'étanchéisation au niveau du rail central n'est utile.

L'invention concerne également un clip profilé destiné à être fixé sur la bordure supérieure du chéneau pour constituer un dispositif d'évacuation d'eau condensée selon l'une des revendications précédentes, comprenant une cornière latérale et un rail central destiné à recevoir un élément de maintien du film plastique pour pincer le film plastique entre l'élément de maintien et la paroi interne du rail central.

Un tel clip permet l'installation d'un dispositif d'évacuation d'eau condensée selon l'invention sur la bordure supérieure d'un chéneau de serre à parois en film plastique. Ce clip profilé permet également d'assurer la fonction de fixation du film.

Associé à des moyens de circulation d'eau tels qu'ils font barrage de manière à ce que l'eau accumulée au sein du rail central affleure sur le bas de l'élément de maintien du film, un tel clip permet aussi l'implémentation de la fonction anti-insecte par accumulation d'eau au sein du rail central. Ce rail central inclut ainsi un mécanisme de siphon utilisant l'accumulation des eaux de condensats, ce mécanisme de siphon interdisant toute entrée d'insecte par les voies d'évacuation d'eau. Une telle forme du clip profilé permet l'accumulation d'eau dans les cornières, l'évacuation vers le rail central et, le cas échéant, empêche l'introduction d'insectes au sein de l'espace intérieur de la serre en utilisant l'eau de condensation accumulée dans le rail central.

Enfin, selon une caractéristique particulière, le clip profilé comprend une glissière sous le rail destiné à enserrer l'arête de la bordure supérieure du chéneau.

L'utilisation d'une simple glissière, permettant de coulisser ou de clipser le clip profilé sur l'arête de la bordure supérieure du chéneau, permet des manoeuvres d'installation du dispositif d'évacuation d'eau selon l'invention particulièrement simples.

L'invention concerne encore un procédé de construction d'un dispositif d'évacuation d'eau condensée selon l'invention comprenant les étapes suivantes :
- fixation, sur une bordure supérieure de chéneau de serre à paroi en film plastique, de clips profilés selon l'invention, ces clips profilés comprenant un rail central en U et une cornière latérale, la fixation des clips étant telle que la cornière latérale est situé à l'intérieur de la serre, les clips comprenant en outre des premiers moyens de circulation d'eau pour permettre l'écoulement de l'eau de la gouttière formée par les cornières latérales vers l'intérieur du rail central et des seconds moyens de circulation d'eau pour permettre l'écoulement de l'eau de l'intérieur du rail central dans le chéneau,
- installation d'un film plastique dans le rail central et d'un élément de maintien du film plastique dans le rail central, cet élément de maintien étant apte à pincer le film plastique entre cet élément de maintien et la paroi interne du rail central,
- étanchéisation de l'alignement des cornières latérales des clips profilés fixés sur la bordure supérieure du chéneau formant gouttière vers l'intérieur de la serre pour recevoir l'eau de condensation s'écoulant sur la paroi intérieure du film plastique en direction du chéneau.

Avec un tel procédé, on assure l'évacuation de l'eau des gouttières internes latérales vers le rail central puis vers le chéneau selon le principe de l'invention.

Selon une réalisation préférentielle, l'étape d'étanchéisation permet la formation de la gouttière et la formation des seconds moyens de circulation d'eau du dispositif d'évacuation d'eau condensée faisant barrière anti-insectes.

Cette caractéristique permet d'implémenter l'invention sans ajouter d'étape de construction supplémentaire puisqu'une telle étanchéisation est par défaut effectuée entre deux clips profilés qui sont généralement des clips profilés en métal.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 montre une vue globale d'un dispositif d'évacuation d'eau condensée selon l'invention, installé sur un chéneau de serre à parois en film plastique;
- la figure 2 montre schématiquement l'installation du film sur le clip profilé utilisé pour la mise en oeuvre du dispositif d'évacuation d'eau condensée selon l'invention ;
- les figures 3A à 3C montrent la mise en oeuvre de moyens de circulation d'eau selon un mode de réalisation préférentiel de l'invention ;
- la figure 4 montre le principe de fonctionnement du dispositif d'évacuation d'eau selon l'invention.

### Description détaillée d'un mode de réalisation

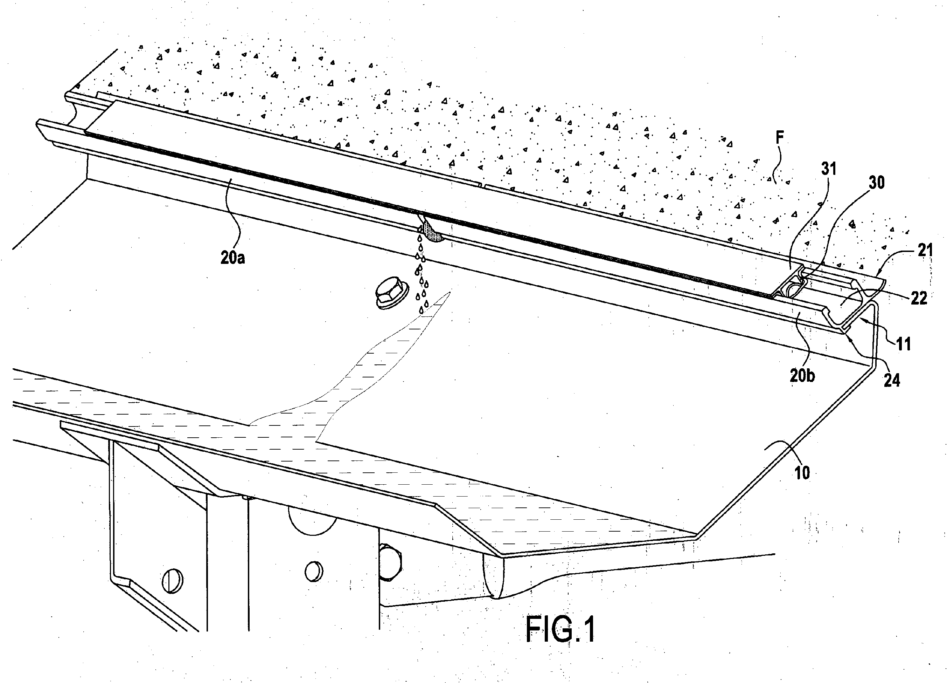

La figure 1 montre un dispositif d'évacuation d'eau selon l'invention installé sur un chéneau 10 portant une bordure de chéneau supérieure 11. Ce chéneau 10 est apte à accueillir l'eau dans sa partie basse et à la laisser s'écouler vers une des extrémités de la serre.

Le dispositif d'évacuation d'eau condensée représenté sur la figure 1 comprend deux clips profilés 20a et 20b, installés dans le prolongement l'un de l'autre sur la bordure supérieure 11 du chéneau 10. La fonction principale de ces clips profilés est le maintien d'un film plastique faisant paroi supérieure de la serre.

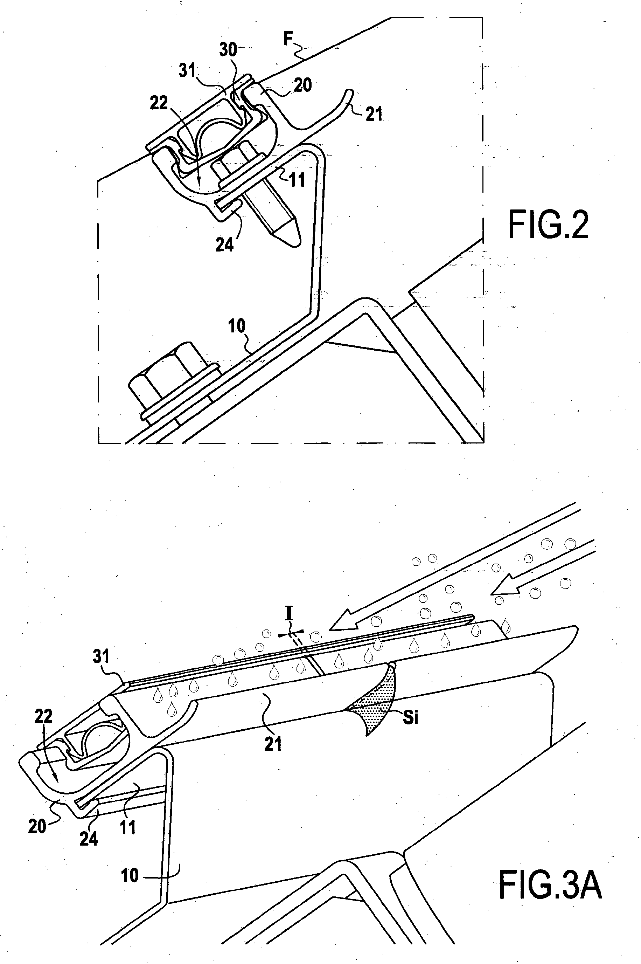

La figure 2 montre le principe du maintien d'un tel film plastique F sur une section du clip profilé 20 et du chéneau 10. Sur cette figure, on voit que le clip profilé 20 est clipsé sur la bordure supérieure 11 du chéneau 10 grâce à une languette formant glissière 24. Cette glissière 24 est placée sous un rail central 22 faisant U au sein du clip profilé 20.

Pour être maintenu par rapport au clip profilé 20, le film F est introduit partiellement dans le rail central 22 du clip profilé 20 et un élément de maintien 30, présentant une souplesse suffisante, est introduit dans le rail central 22 afin de pincer le film F de part et d'autre des parois latérales du rail central 22.

Dans la réalisation présentée sur la figure 2, l'élément de maintien 30 est complété par un élément de verrouillage 31, qui vient assurer l'écartement de l'élément de maintien 30 contre les parois latérales du rail central 22. On note ici que les bordures supérieures 11 de chéneau 10 sont inclinées dans le sens de la pente du toit de la serre de manière à ne pas introduire de rupture de pente du film plastique par rapport à la pente de toit.

On voit aussi, sur cette figure 2, que le clip profilé 20 comprend une cornière latérale 21 qui fait gouttière vers l'intérieur de la serre. On remarque ici que la cornière latérale s'étend perpendiculairement à l'axe médian du rail central. Cela permet, avec l'inclinaison des bordures supérieures 11 des chéneaux 10, de former une gouttière latérale avec les cornières 21. On fait remarquer ici que, dans le cas où la bordure supérieure 11 de chéneau 10 ne serait pas inclinée dans le sens de la pente de toit, la cornière latérale du clip profilé ferait, bien sûr, un angle différent de 90° pour permettre de former la gouttière.

Par exemple, dans le cas où la bordure supérieure de chéneau serait horizontale, la cornière latérale ferait alors un angle inférieur à 90° par rapport à l'axe médian du rail central de manière à permettre la formation de la gouttière.

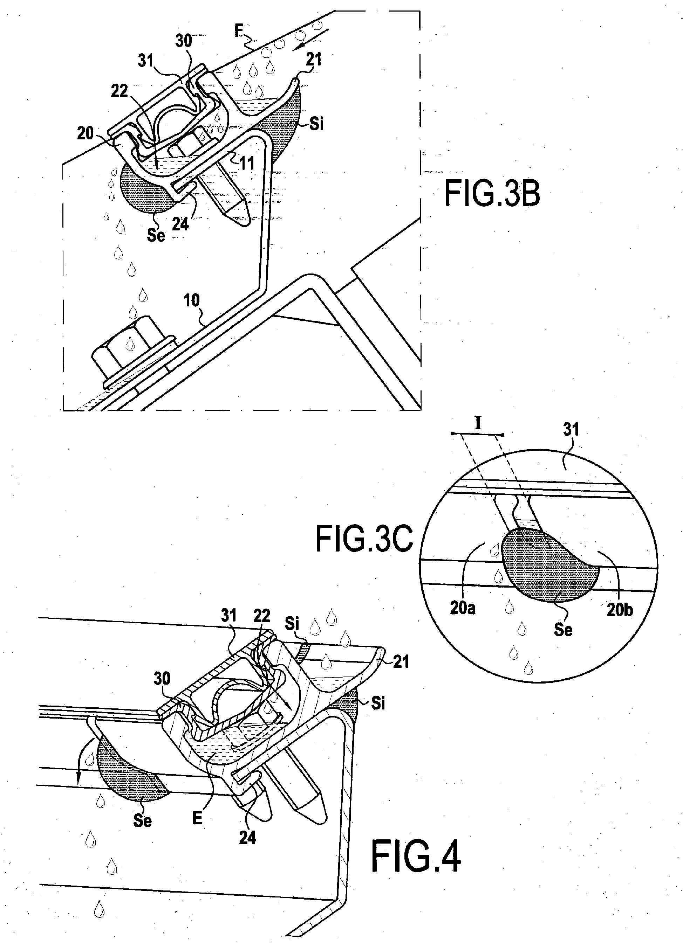

Les figures 3A, 3B et 3C montrent un mode de réalisation particulier de l'invention. Dans ce mode de réalisation particulier, un interstice I sépare les deux clips profilés 20a et 20b.

Ainsi que montré sur la figure 3A, l'interstice I est comblé au niveau des cornières latérales 21 avec un matériau d'étanchéité interne Si, typiquement un gel de silicone. On assure ainsi la formation d'une gouttière à l'intérieur de la serre grâce à la présence des cornières latérales 21 et à leur mise en continuité.

On note ici que des obturateurs sont placés, selon l'invention, en extrémité des cornières latérales afin d'éviter l'évacuation de l'eau au niveau de ces extrémités. Ces obturateurs pourront être également des bouchons de gel de silicone ou des bouchons de conception adaptée pour obstruer les extrémités des gouttières.

La figure 3B montre que le bas du rail central 22 repose contre la bordure supérieure 11 du chéneau 10. Ici, la largeur de cette bordure 11 est sensiblement égale à la largeur du clip profilé 20. Il forme ainsi le fond des interstices I entre les clips profilés 20. Il assure ainsi l'étanchéité au fond du rail central 22 au niveau de l'interstice I ménagé entre les deux clips 20a et 20B.

Enfin, la figure 3C montre le comblement partiel de l'interstice I au niveau de la face latérale extérieure des clips profilés 20a et 20b. Un matériau d'étanchéité externe Se est utilisé. Ici aussi du gel de silicone est avantageusement appliqué. Le matériau Se permet de constituer un barrage à l'écoulement de l'eau vers le chéneau 10 tout en assurant, sur le haut du rail central 22, l'écoulement de l'eau à l'extérieur de celui-ci vers le chéneau.

La figure 4 montre, de manière détaillée, la fonction anti-insectes obtenue dans un mode de réalisation préférentiel de l'invention. On voit sur cette figure que l'eau E, retenue au sein du rail central 22, entoure la partie basse de l'élément de maintien 30 qui ainsi baigne dans l'eau E. Il est nécessaire selon le mode de réalisation avantageux de l'invention que l'eau E vienne au moins affleurer contre le bas de l'élément de maintien 30 du film F et donc contre le film F. Cela assure l'impossibilité, pour des insectes, de passer de l'extérieur vers l'intérieur de la serre, malgré la présence des interstices I. On obtient ainsi un siphon qui empêche la circulation d'air entre l'intérieur et l'extérieur de la serre au niveau du clip profilé. Cela empêche la circulation des insectes de manière très sure et très simple à la fois.

On remarque, ici, que le mode de réalisation décrit est un mode de réalisation préférentiel mais que diverses mises en oeuvre peuvent être réalisées selon les principes de l'invention. Notamment, les moyens de circulation d'eau peuvent avantageusement être tels que chaque clip profilé comprend un premier orifice débouchant, d'un côté, sur le bas de la gouttière formée par les cornières latérales 21 et, de l'autre côté, sur le bas du rail central 22, pour évacuer l'eau accumulée dans les gouttières formées par les cornières latérales 21 vers le rail central 22.

Le rail central 22 comprend alors, du côté opposé à ce premier orifice, un second orifice débouchant vers le chéneau pour l'évacuation de l'eau présente dans le rail central 22.

Suivant le positionnement de cet orifice, l'évacuation permettra, ou non, la mise en oeuvre d'une barrière anti-insectes. En effet, dès lors que l'orifice sera situé sur le bas du rail central 22, l'affleurement de l'eau sur l'élément de maintien 30 ou le comblement de l'orifice par l'écoulement de l'eau ne sera pas nécessairement assuré. L'orifice pourra être également installé au niveau de l'affleurement de l'eau sur l'élément de maintien 30 du film F. Dans ce cas, la fonction de barrière anti-insecte est volontairement assurée.

Dans le cas où de tels clips profilés portant des orifices sont utilisés, on remarque que les clips profilés seront adjoints les uns aux autres sans laisser d'interstice entre eux et en assurant néanmoins l'étanchéité au niveau des jonctions entre clips profilés.

On note que la fabrication des clips profilés portant des orifices demande une étape supplémentaire de perçage transversal des clips. Cette étape est a priori couteuse et n'entre pas par défaut dans les processus d'extrusion qui permettent d'obtenir les clips profilés selon l'invention. On remarque en outre ici que l'action d'étanchéisation entre deux clips profilés est a priori nécessaire qu'un interstice soit ménagé entre eux ou pas. On voit bien ici le caractère préférentiel de la réalisation décrite ci-dessus qui utilise l'étape d'étanchéisation entre deux clips profilés pour mettre en oeuvre les fonctions de l'invention sans autre étape additionnelle.

## Revendications

1. Dispositif d'évacuation d'eau condensée destiné à être installé sur une bordure supérieure (11) d'un chéneau (10) de serre à paroi en film plastique (F), le dispositif comprenant des clips profilés (20) fixés sur la bordure supérieure (11) du chéneau (10), ces clips profilés (20) comprenant un rail central (22) en U destiné à recevoir un élément de maintien (30) du film plastique (F) apte à pincer le film plastique (F) entre cet élément de maintien (30) et la paroi interne du rail central (22), **caractérisé en ce que** les clips profilés (20) comprenent en outre une cornière latérale (21), l'alignement des cornières latérales (21) des clips profilés (20) fixés sur la bordure supérieure (11) du chéneau (10) formant gouttière vers l'intérieur de la serre pour recevoir l'eau de condensation s'écoulant sur la paroi intérieure du film plastique (F) en direction du chéneau (10), les clips profilés (20) comprenant des premiers moyens de circulation d'eau pour permettre l'écoulement de l'eau de la gouttière formée par les cornières latérales (21) vers l'intérieur du rail central (22) et des seconds moyens de circulation d'eau pour permettre l'écoulement de l'eau de l'intérieur du rail central (22) dans le chéneau (10).

2. Dispositif d'évacuation d'eau condensée selon la revendication 1, **caractérisé en ce que** les seconds moyens de circulation sont tels qu'ils font également barrage de rétention de l'eau de condensation dans le rail central (22) de manière à assurer un affleurement de l'eau (E) retenue dans le rail central (22) contre le bas de l'élément de maintien (30), le dispositif d'évacuation réalisant ainsi une fonction de barrière anti-insectes par effet de siphon.

3. Dispositif d'évacuation d'eau condensée selon l'une des revendications 1 et 2, **caractérisé en ce que** les premiers et seconds moyens de circulation d'eau sont situés au niveau de la jonction entre les clips profilés (20).

4. Dispositif d'évacuation d'eau condensée selon la revendication 3, **caractérisé en ce que** les clips profilés (20) sont fixés sur la bordure supérieure du chéneau avec un interstice (I) non nul entre eux, cet interstice (I) constituant les premiers et seconds moyens d'écoulement en assurant une ouverture entre la gouttière (21,Si) formée par les cornières latérales (21) et le rail central (22) et une autre ouverture entre le rail central (22) et le chéneau (10), l'interstice (I) étant comblé sur le fond du rail central (22) et l'interstice (I) étant comblé au niveau des cornières latérales (21) sur l'intérieur de la serre pour former la continuité de la gouttière.

5. Dispositif d'évacuation d'eau condensée selon les revendications 2 et 4, **caractérisé en ce que** l'interstice (I) est partiellement comblé au niveau du chéneau (10) pour former un barrage (Se) assurant l'affleurement de l'eau contre le bas de l'élément de maintien (30) tout en permettant l'écoulement de l'eau vers le chéneau (10).

6. Dispositif d'évacuation d'eau condensée selon l'une des revendications 4 et 5, **caractérisé en ce que** l'interstice (I) est comblé sur le fond du rail central (20) par la bordure supérieure (11) du chéneau (10).

7. Clip profilé (20) destiné à être fixé sur la bordure supérieure (11) d'un chéneau (10) pour constituer un dispositif d'évacuation d'eau condensée selon l'une des revendications précédentes, comprenant une cornière latérale et un rail central (22) destiné à recevoir un élément de maintien (30) du film plastique (F) pour pincer le film plastique (F) entre l'élément de maintien (30) et la paroi interne du rail central (22).

8. Clip profilé selon la revendication 7, **caractérisé en ce qu'**il comprend une glissière (24) sous son rail central (22) destiné à enserrer l'arête de la bordure supérieure (11) du chéneau (10).

9. Procédé de construction d'un dispositif d'évacuation d'eau condensée selon l'une des revendications 1 à 6 comprenant les étapes suivantes :
- fixation, sur une bordure supérieure (11) d'un chéneau (10) de serre à paroi en film plastique (F), de clips profilés (20) selon l'une des revendications 7 et 8, ces clips profilés (20) comprenant un rail central (22) en U et une cornière latérale (21), la fixation des clips (20) étant telle que la cornière latérale (21) est situé à l'intérieur de la serre, les clips (20) comprenant en outre des premiers moyens de circulation d'eau pour permettre l'écoulement de l'eau de la gouttière formée par les cornières latérales (21) vers l'intérieur du rail central (22) et des seconds moyens de circulation d'eau pour permettre l'écoulement de l'eau de l'intérieur du rail central (22) dans le chéneau (10),
- installation d'un film plastique (F) dans le rail central (22) et d'un élément de maintien (30) du film plastique (F) dans le rail central (22), cet élément de maintien (30) étant apte à pincer le film plastique (F) entre cet élément de maintien (30) et la paroi interne du rail central (22),
- étanchéisation de l'alignement des cornières latérales (21) des clips profilés (20) fixés sur la bordure supérieure (11) du chéneau (10) formant gouttière vers l'intérieur de la serre pour recevoir l'eau de condensation s'écoulant sur la paroi intérieure du film plastique (F) en direction du chéneau (10).

10. Procédé selon la revendication 9, **caractérisé en ce que** l'étape d'étanchéisation permet la formation de la gouttière (21,Si) et la formation des seconds moyens de circulation d'eau du dispositif d'évacuation d'eau condensée faisant barrière anti-insectes (Se).

## Patentansprüche

1. Vorrichtung zum Ableiten von Kondenswasser, die dazu bestimmt ist, an einem oberen Rand (11) einer Rinne (10) eines Gewächshauses mit Kunststofffolienwand (F) montiert zu werden, wobei die Vorrichtung Profilklammern (20) aufweist, die an dem oberen Rand befestigt (11) der Rinne (10) befestigt sind, wobei diese Profilklammern (20) eine U-förmige Mittelschiene (22) aufweisen, die dazu bestimmt ist, ein Halteelement (30) der Kunststofffolie (F) aufzunehmen, das geeignet ist, die Kunststofffolie (F) zwischen dem Halteelement (30) und der Innenwand der Mittelschiene (22) einzuklemmen, **dadurch gekennzeichnet, dass** die Profilklammern (20) außerdem ein seitliches Winkelprofil (21) aufweisen, wobei die Ausrichtung der seitlichen Winkelprofile (21) der Profilklammern (20), die an dem oberen Rand (11) der Rinne (10) befestigt sind, eine Dachrinne zum Inneren des Gewächshauses bilden, um das Kondenswasser aufzunehmen, das auf der Innenwand der Kunststofffolie (F) in Richtung der Rinne (10) fließt, wobei die Profilklammern (20) erste Wasserzirkulationsmittel aufweisen, um das Abfließen des Wassers von der Dachrinne, die durch die seitlichen Winkelprofile (21) gebildet ist, in Richtung des Inneren der Mittelschiene (22) zu ermöglichen, und zweite Wasserzirkulationsmittel, um das Abfließen des Wassers aus dem Inneren der Mittelschiene (22) in die Rinne (10) zu ermöglichen.

2. Vorrichtung zum Ableiten von Kondenswasser nach Anspruch 1, **dadurch gekennzeichnet, dass** die zweiten Wasserzirkulationsmittel derart sind, dass sie auch als Sperre zum Rückhalten des Kondenswassers in der Mittelschiene (22) dienen, um ein Austreten des Wassers (E), das in der Mittelschiene (22) zurückgehalten ist, gegen die Unterseite des Halteelements (30) zu gewährleisten, wobei die Vorrichtung zum Ableiten auf diese Weise eine Funktion der Insektensperre durch Siphonwirkung ausübt.

3. Vorrichtung zum Ableiten von Kondenswasser nach einem der Ansprüche 1 und 2, **dadurch gekennzeichnet, dass** die ersten und zweiten Wasserzirkulationsmittel an der Verbindung zwischen den Profilklammern (20) angeordnet sind.

4. Vorrichtung zum Ableiten von Kondenswasser nach Anspruch 3, **dadurch gekennzeichnet, dass** die Profilklammern (20) an der oberen Kante der Rinne mit einem Zwischenraum (I) ungleich Null zwischen ihnen befestigt ist, wobei dieser Zwischenraum (I) die ersten und zweiten Abflussmittel dadurch bildet, dass er eine Öffnung zwischen der Dachrinne (21, Si), die durch die seitlichen Winkelprofile (21) sicherstellt, und der Mittelschiene (22) und eine weitere Öffnung zwischen der Mittelschiene (22) und der Rinne (10) bildet, wobei der Zwischenraum (I) auf dem Boden der Mittelschiene (22) aufgefüllt ist, und der Zwischenraum (I) an den Winkelprofilen (21) an der Innenseite des Gewächshauses aufgefüllt ist, um die Kontinuität der Dachrinne zu bilden.

5. Vorrichtung zum Ableiten von Kondenswasser nach einem der Ansprüche 2 und 4, **dadurch gekennzeichnet, dass** der Zwischenraum (I) teilweise an der Rinne (10) aufgefüllt ist, um eine Sperre (Se) zu bilden, die das Austreten des Wassers gegen die Unterseite des Halteelements (30) gewährleistet und dabei das Abfließen des Wassers in Richtung der Rinne (10) ermöglicht.

6. Vorrichtung zum Ableiten von Kondenswasser nach einem der Ansprüche 4 und 5, **dadurch gekennzeichnet, dass** der Zwischenraum (I) auf dem Boden der Mittelschiene (22) durch den oberen Rand (11) des Kanals (10) aufgefüllt ist.

7. Profilklammer (20), die dazu bestimmt ist, auf dem oberen Rand (11) einer Rinne (10) befestigt zu werden, um eine Vorrichtung zum Ableiten von Kondenswasser nach einem der vorhergehenden Ansprüche zu bilden, umfassend ein Winkelprofil und eine Mittelschiene (22), die dazu bestimmt ist, ein Halteelement (30) der Kunststofffolie (F) aufzunehmen, um die Kunststofffolie (F) zwischen dem Halteelement (30) und der Innenwand der Mittelschiene (22) einzuklemmen.

8. Profilklammer nach Anspruch 7, **dadurch gekennzeichnet, dass** sie eine Gleitschiene (24) unter ihrer Mittelschiene (22) aufweist, die dazu bestimmt ist, die Kante des oberen Randes (11) der Rinne (10) einzuklemmen.

9. Verfahren zum Erstellen einer Vorrichtung zum Ableiten von Kondenswasser nach einem der Ansprüche 1 bis 6, umfassend die folgenden Schritte:
- Befestigen an einem oberen Rand (11) einer Rinne (10) eines Gewächshauses mit Kunststofffolienwand (F) von Profilklammern (20) nach einem der Ansprüche 7 und 8, wobei diese Profilklammern (20) eine U-förmige Mittelschiene (22) und ein seitliches Winkelprofil (21) aufweisen, wobei das Befestigen der Profilklammern (20) derart ist, dass das Winkelprofil (21) im Inneren des Gewächshauses angeordnet ist, wobei die Profilklammern (20) außerdem erste Wasserzirkulationsmittel aufweisen, um das Abfließen des Wassers von der Dachrinne, die durch die seitlichen Winkelprofile (21) gebildet ist, in Richtung des Inneren der Mittelschiene (22) zu ermöglichen, und zweite Wasserzirkulationsmittel, um das Abfließen des Wassers aus dem Inneren der Mittelschiene (22) in die Rinne (10) zu ermöglichen,
- Installieren einer Kunststofffolie (F) in der Mittelschiene (22) und eines Halteelements (30) der Kunststofffolie (F) in der Mittelschiene (22), wobei dieses Halteelement (30) geeignet ist, die Kunststofffolie (F) zwischen diesem Halteelement (30) und der Innenwand der Mittelschiene (22) einzuklemmen,
- Dichten der Ausrichtung der seitlichen Winkelprofile (21) der Profilklammern (20), die an dem oberen Rand (11) der Rinne (10) befestigt sind, die eine Dachrinne zum Inneren des Gewächshauses bilden, um das Kondenswasser aufzunehmen, das auf der Innenwand der Kunststofffolie (F) in Richtung der Rinne (10) fließt.

10. Verfahren nach dem Anspruch 9, **dadurch gekennzeichnet, dass** der Schritt des Dichtens das Bilden der Dachrinne (21, Si) und das Bilden der zweiten Wasserzirkulationsmittel der Vorrichtung zum Ableiten von Kondenswasser ermöglicht, wodurch eine Insektensperre (Se) gebildet wird.

## Claims

1. A water condensation removal device for installing on a top margin (11) of a gutter (11) of a greenhouse having plastics-film walls (F), the device comprising section member clips (20) fastened to the top margin (11) of the gutter (10), the section member clips (20) presenting a central rail (22) of channel section for receiving a holder element (30) for holding the plastics film (F) and suitable for pinching the plastics film (F) between the holder element (30) and the inside wall of the central rail (22), the device being **characterized in that** the section member clips (20) further comprise respective lateral angle bars (21), the alignment of lateral angle bars (21) of the section member clips (20) fastened on the top margin (11) of the gutter (10) forming a trough towards the inside of the greenhouse for receiving condensation water flowing on the inside wall of the plastics film (F) towards the gutter (10), the section member clips (20) having first water flow means for enabling water to flow from the trough formed by the lateral angle bars (21) to the inside of the central rail (22), and second water flow means for allowing water to flow from the inside of the central rail (22) into the gutter (10).

2. A water condensation removal device according to claim 1, **characterized in that** the second flow means are such that they also form a dam for retaining condensation water in the central rail (22) so as to ensure that the water (E) retained in the central rail (22) is flush with the bottom of the holder element (30), the removal device thus performing an anti-insect barrier function by the siphon effect.

3. A water condensation removal device according to claim 1 or claim 2, **characterized in that** the first and second water flow means are situated at the junction between the section member clips (20).

4. A water condensation removal device according to claim 3, **characterized in that** the section member clips (20) are fastened to the top margin of the gutter with a non-zero gap (I) between them, the gap (I) constituting the first and second flow means by providing one opening between the trough (21, Si) formed by the lateral angle bars (21) and the central rail (22), and another opening between the central rail (22) and the gutter (10), the gap (I) being filled at the bottom of the central rail (22) and the gap (I) being filled level with the lateral angle bars (21) on the inside of the greenhouse in order to form continuity for the trough.

5. A water condensation removal device according to claims 2 and 4, **characterized in that** the gap (I) is partially filled at the level of the gutter (10) to form a dam (Se) ensuring that the water is flush with the bottom of the holder elements (30) while allowing water to flow towards the gutter (10).

6. A water condensation removal device according to claim 4 or claim 5, **characterized in that** the gap (I) is filled on the bottom of the central rail (20) by the top margin (11) of the gutter (10).

7. A section member clip (20) for fastening on the top margin (11) of a gutter (10) in order to constitute a water condensation removal device according to any preceding claim, the clip having a lateral angle bar and a central rail (22) for receiving a holder element (30) for holding the plastics film (F) by pinching the plastics film (F) between the holder element (30) and the inside wall of the central rail (22).

8. A section member clip according to claim 7, **characterized in that** it includes a slideway (24) under its central rail (22) for clamping onto the edge of the top margin (11) of the gutter (10).

9. A method of constructing a water condensation removal device according to any one of claims 1 to 6, the method comprising the following steps:
- fastening section member clips (20) according to claim 7 or claim 8 on a top margin (11) of a gutter (10) of a greenhouse having a plastics-film wall (F), each section member clip (20) comprising a channel section central rail (22) and a lateral angle bar (21), the clips (20) being fastened in such a manner that the respective lateral angle bars (21) are situated inside the greenhouse, the clips (20) also including first water flow means for enabling water to flow from the trough formed by the lateral angle bars (21) towards the inside of the central rail (22), and second water flow means for allowing water to flow from the inside of the central rail (22) into the gutter (10);
- installing a plastics film (F) in the central rail (22) and installing a holder element (30) for holding the plastics film (F) in the central rail (22), the holder element (30) being suitable for pinching the plastics film (F) between the holder element (30) and the inside wall of the central rail (22); and
- sealing the alignment of the lateral angle bars (21) of the section member clips (20) fastened to the top margin (11) of the gutter (10) forming the trough towards the inside of the greenhouse in order to receive condensation water flowing on the inside wall of the plastics film (F) towards the gutter (10).

10. A method according to claim 9, **characterized in that** the sealing step enables the trough (21, Si) to be formed and enables the second water flow means of the water condensation removal device to be formed so as to constitute a barrier against insects (Se).
